# EUROPEAN PATENT APPLICATION

(11) **EP 4 651 226 A1**
(43) Date of publication of application: **19.11.2025**
(21) Application number: 24873023.6
(22) Date of filing: 27.09.2024
(51) Int. Cl.: H01M 4/134, H01M 4/38, H01M 4/04, C01B 33/021, H01M 10/052, H01M 4/02

(54) **ANODE FOR LITHIUM SECONDARY BATTERY, LITHIUM SECONDARY BATTERY COMPRISING SAME, AND MANUFACTURING METHOD FOR ANODE FOR LITHIUM SECONDARY BATTERY**

(30) Priority: 27.09.2023 KR 20230129932; 26.09.2024 KR 20240130673
(71) Applicant: LG Energy Solution, Ltd., Seoul 07335 (KR)
(72) Inventor: PARK, Junhyoung, Daejeon 34122 (KR); LEE, Jaewook, Daejeon 34122 (KR); KWON, Yohan, Daejeon 34122 (KR)
(74) Representative: Hoffmann Eitle
(86) International application number: PCT/KR2024/014688
(87) International publication number: WO 2025/071315

(57) **Abstract**

The present invention relates to an anode for a lithium secondary battery, a lithium secondary battery comprising same, and a manufacturing method for an anode for a lithium secondary battery, the anode comprising an anode active material layer comprising: a silicon-based anode active material containing SiOx (0≤x<2) and Si nanoparticles; an anode conductive material; and an anode binder, wherein the silicon-based anode active material is in a carbon-uncoated state, the Si nanoparticles having an average particle diameter (D50) of 1 nm or smaller, and at least one surface of the anode active material layer is pre-lithiated.

## Description

### [Technical Field]

This application claims priority to and the benefit of Korean Patent Application No. 10-2023-0129932 filed in the Korean Intellectual Property Office on September 27, 2023 and Korean Patent Application No. 10-2024-0130673 filed in the Korean Intellectual Property Office on September 26, 2024, the entire contents of which are incorporated herein by reference.

The present invention relates to a negative electrode for a lithium secondary battery, a lithium secondary battery including the same, and a method for manufacturing a negative electrode for a lithium secondary battery.

### [Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery., and the trend is shifting toward higher loading to improve energy density. However, as a result, an electrode resistance and a cell resistance also increase, making it difficult to secure performance such as high output and rapid charge. To solve this problem, attempts are being made to physically expand a reaction surface by manufacturing a pattern electrode, thereby inducing resistance reduction. The pattern electrode enables performance improvement by inducing reactions not only on the electrode surface but also in the depth direction.

In general, a secondary battery includes a positive electrode, a negative electrode, an electrolyte, and a separator. The negative electrode includes a negative electrode active material for intercalating and deintercalating lithium ions coming out from the positive electrode, and silicon-based particles having a high discharge capacity may be used as the negative electrode active material.

In general, carbon materials such as graphite are used for the negative electrode of lithium secondary batteries, but the theoretical capacity density of carbon is 372 mAh/g (833 mAh/cm³). Therefore, in order to improve the energy density of the negative electrode, silicon (Si), tin (Sn), and oxides and alloys thereof, which are alloyed with lithium, are considered as negative electrode materials. Among them, silicon-based materials have attracted attention due to their low cost and high capacity (4200 mAh/g).

However, the silicon-based materials haves a problem in that their mechanical stability is reduced due to volume changes (contraction or expansion) during intercalation and deintercalation processes of lithium ions, which results in deterioration of cycle characteristics. Therefore, it is necessary to develop a material having structural stability, which is excellent in stability when used as an active material of an electrochemical device, and capable of ensuring cycle characteristics.

In addition, when a silicon-based negative electrode active material is used, a problem arises in that the initial irreversible capacity is large. In the charge/discharge reaction of a lithium secondary battery, lithium released from the positive electrode is intercalated into the negative electrode during charging and is deintercalated from the negative electrode to return to the positive electrode during discharging. However, silicon-based active materials undergo severe volume changes and surface side reactions, so that a substantial amount of lithium intercalated into the negative electrode during the initial charging cannot return to the positive electrode, resulting in an increased initial irreversible capacity. When the initial irreversible capacity increases, the problem of a rapid decrease in the initial capacity and efficiency of the battery arises.

In order to solve the above problems, a method for pre-lithiating a silicon negative electrode including a silicon-based negative electrode active material is known. As the pre-lithiation method, known methods include a method of manufacturing an electrode after lithiation by a physicochemical method such as electrolytic plating, lithium metal transfer, and lithium metal deposition, a method of electrochemically pre-lithiating a negative electrode, and the like.

### [Citation List]

### [Patent Literature]

Korean Patent Application Publication No. 10-2022-0103469

### [Detailed Description of the Invention]

### [Technical Problem]

The present invention relates to a negative electrode for a lithium secondary battery, a lithium secondary battery including the same, and a method for manufacturing a negative electrode for a lithium secondary battery capable of improving the initial capacity, efficiency, and service life of a battery.

### [Technical Solution]

An exemplary embodiment of the present specification provides a negative electrode for a lithium secondary battery, including a negative electrode active material layer including: a silicon-based negative electrode active material including SiOₓ (0 ≤ x < 2) and Si nanoparticles; a negative electrode conductive material; and a negative electrode binder, wherein the silicon-based negative electrode active material is in a carbon-uncoated state, an average particle diameter (D50) of the Si nanoparticles is 1 nm or less, and the negative electrode active material layer is pre-lithiated on at least one surface.

An exemplary embodiment of the present specification provides a lithium secondary battery including: a positive electrode for a lithium secondary battery; the negative electrode for a lithium secondary battery described above; a separator provided between the positive electrode for a lithium secondary battery and the negative electrode for a lithium secondary battery; and an electrolyte.

Another exemplary embodiment of the present specification provides a battery module including the lithium secondary battery described above.

Still another exemplary embodiment of the present specification provides a battery pack including the lithium secondary battery described above.

An exemplary embodiment of the present specification provides a battery pack including the battery module described above.

Further, an embodiment of the present specification provides a method for manufacturing a negative electrode for a lithium secondary battery, the method including: preparing a negative electrode active material layer; and pre-lithiating at least one surface of the negative electrode active material layer, wherein the negative electrode active material layer includes a silicon-based negative electrode active material including SiOₓ (0 ≤ x < 2) and Si nanoparticles; a negative electrode conductive material; and a negative electrode binder, the silicon-based negative electrode active material is in a carbon-uncoated state, and an average particle diameter (D50) of the Si nanoparticles is 1 nm or less.

### [Advantageous Effects]

A negative electrode for a lithium secondary battery according to an exemplary embodiment of the present specification can have advantages in terms of the service life performance of the battery while maintaining the initial capacity and efficiency of the battery by keeping the size of Si nanoparticles in the silicon-based negative electrode active material small.

In addition, the negative electrode for a lithium secondary battery according to the exemplary embodiment can improve the low conductivity and initial efficiency of the silicon-based negative electrode active material by performing a pre-lithiation process, thereby contributing to the initial capacity expression of the battery and increasing the energy density.

### [Brief Description of Drawings]

FIG. 1 is a view showing a stack structure of a negative electrode for a lithium secondary battery according to an exemplary embodiment of the present specification.
FIG. 2 is a view showing a stack structure of a lithium secondary battery according to an exemplary embodiment of the present specification.

### [Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

It will be further understood that the terms "comprises", "includes" or "have" when used in the present specification specify the presence of stated features, numbers, steps, constitutional elements and/or combinations thereof, but do not preclude the presence or addition of one or more other features, numbers, steps, constitutional elements, and/or combinations thereof.

In the present specification, when a part of a layer or the like is referred to as being "above" or "on" another part, it may be directly on the other element or an intervening element may also be present. In contrast, when an element is referred to as being "directly on" another element, there are no intervening elements present. Further, when an element is referred to as being "above" or "on" a reference portion, the element is positioned above or below the reference portion, and it does not necessarily mean that the element is positioned "above" or "on" in a direction opposite to gravity.

In the present specification, when one member is referred to as being provided on "both surfaces" of another member, this means that one member is provided on one surface of another member, and one member is also provided on another surface corresponding to the one surface. In addition, this includes not only a case where one member is in contact with another member, but also a case where still another member is present between the two members.

In the present specification, 'p to q' means a range of 'p or more and q or less'.

In the present specification, the terms such as "~unit" and "device" refer to units for processing at least one function or operation.

In the present specification, "Dn" refers to a particle size distribution, and refers to a particle diameter (average particle diameter) at the n% point in the cumulative distribution of the number of particles according to the particle diameter. That is, D50 is a particle diameter at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Note that the average particle diameter may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, the average particle diameter of Si nanoparticles may be confirmed through X-ray diffraction analysis, and the X-ray diffraction analysis may be performed using an X-ray diffraction (XRD) analysis device (product name: D4-endeavor, manufacturer: Bruker). Specifically, XRD measurement may be performed by sampling a specimen in the form of powder onto a holder and using Cu K alpha X-rays. The size of Si nanoparticles may be calculated by fitting the XRD results using the Scherrer equation, and in this case, the size of the nanoparticles may be measured based on Si(220) (2θ=47.5° to 48.5°).

In an exemplary embodiment of the present specification, the particle size or particle diameter may refer to the average diameter or representative diameter of each grain forming metal powder.

As used herein, the singular forms "a", "an" and "the" are intended to include the plural forms as well, unless the context clearly indicates otherwise.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

Hereinafter, preferred exemplary embodiments of the present invention will be described in detail. However, it should be understood that the exemplary embodiments of the present invention may be modified in various forms and the scope of the present invention is not limited to the exemplary embodiments described below.

A negative electrode for a lithium secondary battery according to an exemplary embodiment of the present specification includes a negative electrode active material layer comprising: a silicon-based negative electrode active material including SiOₓ (0 ≤ x < 2) and Si nanoparticles; a negative electrode conductive material; and a negative electrode binder, wherein the silicon-based negative electrode active material is in a carbon-uncoated state, an average particle diameter (D50) of the Si nanoparticles is 1 nm or less, and the negative electrode active material layer is pre-lithiated on at least one surface.

In the charging and discharging reactions of the lithium secondary battery, lithium discharged from the positive electrode is intercalated into the negative electrode during charging, and is deintercalated from the negative electrode to return to the positive electrode again during discharging. In the case of the silicon-based negative electrode active material, severe volume changes and surface side reactions occur, causing a large amount of lithium intercalated in the negative electrode during initial charging not to return to the positive electrode, thereby increasing the initial irreversible capacity. When the initial irreversible capacity increases, there occurs a problem that the battery capacity and the cycle are rapidly reduced.

In the present invention, a pre-lithiation pretreatment is performed on at least one surface of the negative electrode active material layer according to an exemplary embodiment of the present specification, thereby solving the initial irreversible capacity problem and improving the battery capacity and service life. In particular, the small-sized Si nanoparticles are included, so that the volume expansion process during the reaction with lithium when charging the lithium secondary battery does not exert stress on the surrounding material in the negative electrode, thereby excellently maintaining the battery service life.

The negative electrode active material layer according to an exemplary embodiment of the present specification may include a silicon-based negative electrode active material including SiOₓ (0 ≤ x < 2) and Si nanoparticles.

The SiOₓ (0 ≤ x < 2) may be present in an amorphous state and includes nano-sized Si particles randomly dispersed therein, and the randomly dispersed nano-sized Si particles are referred to as Si nanoparticles according to the present specification.

That is, SiOₓ (0 ≤ x < 2) according to an exemplary embodiment of the present specification may be in an amorphous phase, with Si nanoparticles dispersed therein. This can be confirmed through TEM (Transmission Electron Microscopy) or XRD (X-ray diffraction) analysis.

The SiOₓ (0 ≤ x < 2) corresponds to an amorphous matrix in the silicon-based negative electrode active material. The SiOₓ (0 ≤ x < 2) may be in a form that includes Si and SiO₂, and the Si may form a phase. That is, the above x corresponds to the number ratio of O to Si contained in the SiOₓ (0 ≤ x < 2). When the silicon-based negative electrode active material includes SiOₓ (0 ≤ x < 2), the discharge capacity of the secondary battery can be improved.

The silicon-based negative electrode active material may be formed by heating and vaporizing mixed powder of Si powder and SiO₂ powder, and then depositing the vaporized mixed gas. Specifically, the mixed powder of Si powder and SiO₂ powder may be heat treated at 1400°C to 1800°C or 1400°C to 1600°C under vacuum.

In an exemplary embodiment of the present specification, an average particle diameter (D50) of the Si nanoparticles may be 1 nm or less, specifically, 0.8 nm or less.

In addition, in an exemplary embodiment of the present specification, the average particle diameter (D50) of the Si nanoparticles may be 0.1 nm or greater, specifically 0.3 nm or greater.

In this case, the average particle diameter (D50) of Si nanoparticles dispersed in the amorphous SiOₓ (0 ≤ x < 2) may be measured through X-ray Diffraction analysis.

Originally, silicon-based negative electrode active materials undergo very complex crystal structure changes in reactions of electrochemically absorbing, storing, and releasing lithium atoms. As the reactions of electrochemically absorbing, storing, and releasing lithium atoms progress, the composition and crystal structure of silicon particles change to Si (crystal structure: Fd3m), LiSi (crystal structure: I41/a), Li₂Si(crystal structure: C2/m), Li₇Si₂(Pbam), Li₂₂Si₅(F23), and the like, and the volume of the silicon particles expands by about four times due to the complex crystal structure changes. Accordingly, when charge and discharge cycles are repeated, the silicon particles are destroyed, and bonds are formed between lithium atoms and silicon particles, leading to damage to intercalation sites of lithium atoms that the silicon particles initially have, which may result in a significant reduction of the cycle life. In particular, for a negative electrode manufactured with a negative electrode active material in which the average particle diameter (D50) of the Si nanoparticles exceeds 1 nm according to an exemplary embodiment of the present specification, the volume expansion process during the reaction with lithium when charging and discharging the lithium secondary battery exerts stress on the surrounding material in the negative electrode, leading to a deterioration in battery performance, such as a reduction in battery service life. Therefore, it is preferable that the Si nanoparticles fall within the average particle diameter (D50) range.

In addition, the silicon-based negative electrode active material according to an exemplary embodiment of the present specification may be in a carbon-uncoated state.

In the related art, to improve the low conductivity of silicon-based negative electrode active materials and to alleviate the volume expansion of the silicon-based negative electrode active materials during charging and discharging, a carbon coating layer is formed on the surface of the negative electrode active material. However, during the process of performing an additional heat treatment to form the coating layer, Si nanoparticles in the silicon-based negative electrode active material grow to sizes of about several tens of nanometers, leading to a reaction with lithium and the volume expansion as described above, which significantly reduces the capacity and service life of the negative electrode.

Generally, the additional heat treatment process to form a carbon coating on the silicon-based negative electrode active material is performed under conditions of 700°C or higher and 1200°C or lower. However, the negative electrode active material according to an exemplary embodiment of the present specification can satisfy the above-described average particle diameter (D50) range of the Si nanoparticles by not performing additional heat treatment under conditions of the temperature within the range, thereby preventing the reduction in battery service life caused by the volume expansion of silicon.

Specifically, to control the average particle diameter (D50) of Si nanoparticles dispersed in carbon-uncoated SiOₓ (0 ≤ x < 2), a method of limiting the heat treatment temperature and time may be applied. For example, a heat treatment at 1000°C or lower for less than 30 minutes can form Si nanoparticles with an average particle diameter (D50) of 1 nm or less.

Therefore, the negative electrode active material layer according to an exemplary embodiment of the present specification is characterized by including a silicon-based negative electrode active material that is not coated with carbon, i.e., a carbon-uncoated silicon-based negative electrode active material. As a result, the size of the Si nanoparticles can be kept small, which leads to stress not being exerted on the surrounding material in the negative electrode during the volume expansion caused by the reaction with lithium during charging and discharging. Additionally, the process cost and time required for carbon coating can be reduced. In addition, the low conductivity, which may be due to the lack of carbon coating, can be sufficiently overcome by performing pre-lithiation as described below.

Whether the silicon-based negative electrode active material is coated with carbon can be confirmed through an image obtained by passing a high-voltage accelerated electron beam through the silicon-based negative electrode active material using a transmission electron microscope (TEM) .

The negative electrode for a lithium secondary battery according to an exemplary embodiment of the present specification, may include 60 parts by weight or more and 95 parts by weight or less, specifically 65 parts by weight or more and 90 parts by weight or less, and more specifically 70 parts by weight or more and 85 parts by weight or less of the SiOₓ (0 ≤ x < 2) based on 100 parts by weight of the negative electrode active material layer. When the content of the SiOₓ (0 ≤ x < 2) falls within the above range, the capacity and energy density can be increased.

The silicon-based negative electrode active material according to an exemplary embodiment of the present specification may be coated with a material other than carbon, or may be in a form in which SiOₓ (0 ≤ x < 2) is exposed to the negative electrode binder and the negative electrode conductive material without being coated with another material.

The silicon-based negative electrode active material according to an exemplary embodiment of the present specification may include metal impurities.

The metal impurities are impurities that may be included in silicon, and a content thereof may fall within a range of 0.1 part by weight or less based on 100 parts by weight of the total silicon-based active material.

Note that an average particle diameter (D50) of the silicon-based negative electrode active material according to an exemplary embodiment of the present specification may be 1 µm to 10 µm, specifically 3 µm to 8 µm. In this case, the average particle diameter (D50) may be based on an average particle diameter (D50) of the final particle including both SiOₓ (0 ≤ x < 2) and Si nanoparticles.

When the average particle diameter (D50) falls within the above range, a specific surface area of the particles falls within a suitable range, resulting in formation of a viscosity of a negative electrode slurry within an appropriate range. Accordingly, particles constituting the negative electrode slurry are smoothly dispersed. In addition, the size of the silicon-based negative electrode active material has a value equal to or greater than the lower limit of the range, resulting in an excellent contact area between the silicon-based negative electrode active material particles and the conductive material due to a composite composed of the conductive material and binder in the negative electrode slurry, which increases the likelihood of maintaining a conductive network, thereby improving the capacity retention rate. Note that, when the average particle diameter (D50) falls within the above range, excessively large silicon-based negative electrode active material particles are excluded, resulting in formation of a smooth surface of the negative electrode. Accordingly, a phenomenon of current density non-uniformity during charging and discharging can be prevented.

In an exemplary embodiment of the present specification, the silicon-based negative electrode active material generally has a characteristic BET specific surface area. The BET specific surface area of the silicon-based negative electrode active material is preferably 0.01 m²/g to 150.0 m²/g, more preferably 0.1 m²/g to 100.0 m²/g, particularly preferably 0.2 m²/g to 80.0 m²/g, and most preferably 0.2 m²/g to 18.0 m²/g. The BET specific surface area is measured in accordance with DIN 66131 (using nitrogen).

In addition, the negative electrode for a lithium secondary battery according to an exemplary embodiment of the present specification may include 60 parts by weight or more, preferably 65 parts by weight or more, and more preferably 70 parts by weight or more and 95 parts by weight or less, preferably 90 parts by weight or less, and more preferably 80 parts by weight or less of the silicon-based negative electrode active material based on 100 parts by weight of the negative electrode active material layer.

The negative electrode for a lithium secondary battery according to an exemplary embodiment of the present specification can increase the energy density by including the high content of silicon-based negative electrode active material with a significantly high capacity. At the same time, the negative electrode includes the conductive material and binder that can control the volume expansion rate during the charge and discharge processes even when the silicon-based active material is used in the high content, resulting in excellent output characteristics during charging and discharging without deteriorating the performance of the negative electrode.

In an exemplary embodiment of the present specification, the negative electrode active material layer may be pre-lithiated on at least one surface.

In an exemplary embodiment of the present specification, the negative electrode active material layer may be pre-lithiated on one surface, or pre-lithiated on both surfaces.

Lithium secondary batteries undergo lithium loss from the first charge after a battery is manufactured. During subsequent charge/discharge cycles and high-temperature storage periods, lithium loss continues to occur, leading to battery degradation. To compensate for the lithium loss, lithium is additionally introduced into a battery before the battery operates, a process referred to as pre-lithiation. The negative electrode for a lithium secondary battery according to an exemplary embodiment of the present specification can increase the battery capacity and improve the battery service life, as at least one surface of the negative electrode active material layer is pre-lithiated.

In an exemplary embodiment of the present specification, the pre-lithiation may be performed by a lithium electrolytic plating process, a lithium metal transfer process, a lithium metal deposition process, or a stabilized lithium metal powder (SLMP) coating process, and specifically a process of introducing, as an additive, a compound containing an excessive amount of lithium during battery manufacturing, a process of depositing a lithium metal thin film on a surface of an electrode active material to manufacture an electrode assembly and then injecting an electrolyte so that lithium diffuses into the negative electrode active material, thereby enabling pre-lithiation, a process of enabling a pre-lithiation reaction to spontaneously progress by bringing a lithium metal and an electrode into contact under dry room conditions, a process of adding lithium, in an amount to be consumed during first charging, to an electrode in the form of stabilized metal powder, or the like.

In an exemplary embodiment of the present specification, the pre-lithiation may be performed by a lithium metal transfer process. When the pre-lithiation is performed by the lithium metal transfer process, lithium loss can be minimized, and the reaction speed is fast, making it applicable to mass production.

In this case, whether the negative electrode in the present specification is pre-lithiated can be confirmed by an increase in the weight of the entire manufactured negative electrode increasing due to lithium introduced into the negative electrode active material layer, compared to its weight before pre-lithiation. In this case, the weight increase due to lithium introduced into the negative electrode active material layer by pre-lithiation may be approximately 5% or more. The weight of the negative electrode and lithium can be measured inside a glove box or glove compartment filled with argon (Ar) gas, using a balance capable of measuring from mg to µg units.

Alternatively, whether the negative electrode in the present specification is pre-lithiated can be indirectly confirmed by an increase in the charge/discharge efficiency to 85% or more during the first charge/discharge cycle of the finally manufactured battery, and the charge/discharge efficiency can be confirmed by measuring the charge and discharge capacities of the battery and calculating the same according to Formula A-1 below. charge/discharge efficiency = (discharge capacity/charge capacity) × 100 (%)

Alternatively, whether the negative electrode in the present specification is pre-lithiated can be confirmed by a change in color of the negative electrode active material layer. Before pre-lithiation, the negative electrode active material layer is black. After pre-lithiation, the carbon-based negative electrode active material layer changes to gold, while the silicon-based negative electrode active material layer changes to green or purple. Such a color change is attributed to production of nitrogen oxides by side reactions.

The above description of the pre-lithiation may be applied to the description of the pre-lithiation step below.

The negative electrode conductive material included in the negative electrode active material layer according to an exemplary embodiment of the present specification may include one or more selected from the group consisting of a point-like conductive material, a planar conductive material, and a linear conductive material, and specifically, may include one or more selected from the group consisting of a planar conductive material and a linear conductive material.

The planar conductive material can serve to improve conductivity by increasing surface contact among silicon particles in the negative electrode, and at the same time, to suppress the disconnection of the conductive path due to the volume expansion, and is used as a concept including a bulk-type conductive material or a plate-like conductive material.

In an exemplary embodiment of the present specification, the planar conductive material may include at least one selected from the group consisting of plate-like graphite, graphene, graphene oxide, and graphite flake, and preferably may be plate-like graphite.

In an exemplary embodiment of the present invention, an average particle diameter (D50) of the planar conductive material may be 2 µm to 7 µm, specifically 3 µm to 6 µm, and more specifically 3.5 µm to 5 µm. When the above range is satisfied, the sufficient particle size results in easy dispersion without causing an excessive increase in viscosity of the negative electrode slurry. Therefore, the dispersion effect is excellent when performing dispersion using the same equipment and time.

In an exemplary embodiment of the present specification, the planar conductive material may have a D10 of 0.5 µm or greater and 1.7 µm or less, a D50 of 3.5 µm or greater and 5 µm or less, and a D90 of 6.5 µm or greater and 15.0 µm or less.

In an exemplary embodiment of the present specification, for the planar conductive material, a planar conductive material with a high specific surface area having a high BET specific surface area or a planar conductive material with a low specific surface area may be used.

In an exemplary embodiment of the present specification, for the planar conductive material, a planar conductive material with a high specific surface area or a planar conductive material with a low specific surface area may be used without limitation. However, in particular, the planar conductive material according to the present invention can affect to some extent the electrode performance due to the dispersion effect, so that a planar conductive material with a low specific surface area, which does not cause a problem in dispersion, is used particularly preferably.

In an exemplary embodiment of the present specification, the planar conductive material may have a BET specific surface area of 5 m²/g or greater.

In another exemplary embodiment, the planar conductive material may have a BET specific surface area of 5 m²/g or greater and 500 m²/g or less, preferably 5 m²/g or greater and 300 m²/g or less, and more preferably 5 m²/g or greater and 250 m²/g or less.

In another exemplary embodiment, the planar conductive material is a planar conductive material with a high specific surface area, and the BET specific surface area may fall within a range of 50 m²/g or greater and 500 m²/g or less, preferably 80 m²/g or greater and 300 m²/g or less, and more preferably 100 m²/g or greater and 300 m²/g or less.

In another exemplary embodiment, the planar conductive material is a planar conductive material with a low specific surface area, and the BET specific surface area may fall within a range of 5 m²/g or greater and 40 m²/g or less, preferably 5 m²/g or greater and 30 m²/g or less, and more preferably 5 m²/g or greater and 25 m²/g or less.

Examples of the linear conductive material include carbon nanotubes. The carbon nanotubes may be bundle-type carbon nanotube, and the bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode. In addition, the bundle-type carbon nanotubes can control the distortion of the electrode caused by the volume expansion of the silicon-based negative electrode active material, thereby maintaining the initial cycle characteristics of the battery.

In an exemplary embodiment of the present specification, the linear conductive material may include one or more selected from the group consisting of single-walled carbon nanotubes (SWCNTs) and multi-walled carbon nanotubes (MWCNTs).

In an exemplary embodiment of the present specification, the linear conductive material may have a BET specific surface area of 100 m²/g or greater and 10,000 m²/g or less, specifically 500 m²/g or greater and 5,000 m²/g or less, and more specifically 1,000 m²/g or greater and 1,500 m²/g or less.

In addition, in an exemplary embodiment of the present specification, an aspect ratio of the linear conductive material may be 500 or greater, specifically 1,000 or greater, and more specifically 10,000 or greater, and 1,000,000 or less, specifically 100,000 or less, and more specifically 50,000 or less.

In an exemplary embodiment of the present specification, the negative electrode conductive material may further include a point-like conductive material, and the point-like conductive material refers to a conductive material that may be used to improve conductivity of the negative electrode and has conductivity without causing a chemical change. Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present specification, the point-like conductive material may have a BET specific surface area of 40 m²/g or greater and 70 m²/g or less, preferably 45 m²/g or greater and 65 m²/g or less, and more preferably 50 m²/g or greater and 60 m²/g or less.

In an exemplary embodiment of the present specification, a particle diameter of the point-like conductive material may be 10 nm to 100 nm, preferably 20 nm to 90 nm, and more preferably 40 nm to 60 nm.

In an exemplary embodiment of the present specification, the negative electrode conductive material may be included in an amount of 1 part by weight or more and 40 parts by weight or less based on 100 parts by weight of the negative electrode active material layer.

In another exemplary embodiment, the negative electrode conductive material may be included in an amount of 1 part by weight or more and 40 parts by weight or less, preferably 5 parts by weight or more and 30 parts by weight or less, and more preferably 10 parts by weight or more and 25 parts by weight or less, based on 100 parts by weight of the negative electrode active material layer.

The negative electrode conductive material according to the present specification has a completely different composition from a conductive material that is applied to the positive electrode. That is, the negative electrode conductive material according to the present specification serves to support a contact point between negative electrode active materials, which undergo a large volume expansion of the electrode due to charging and discharging, and the positive electrode conductive material serves to impart partial conductivity while playing a buffer role as a cushioning role when rolled, and is completely different in composition and role from the negative electrode conductive material of the present specification.

In addition, the negative electrode conductive material according to the present specification is applied to a silicon-based negative electrode active material and has a completely different composition from that of the conductive material applied to a graphite-based active material. That is, the conductive material used for an electrode having a graphite-based active material simply has small particles with respect to the active material, and thus has the characteristics of enhancing output characteristics and imparting partial conductivity, and the composition and role thereof are completely different from those of the negative electrode conductive material applied together with a silicon-based active material as in the present invention.

In an exemplary embodiment of the present specification, the planar conductive material used as the negative conductive material described above is a material having a planar or plate-like shape, and can be expressed as plate-like graphite. That is, the planar conductive material is a material that is included in order to maintain a conductive path in the negative electrode active material layer, and refers to a material for securing a conductive path in a planar shape inside the negative electrode active material layer, rather than playing a role in storing and releasing lithium.

That is, in the present specification, the use of plate-like graphite as a negative electrode conductive material means that it is processed into a planar or plate-like shape and used as a material that secures a conductive path rather than a role of storing or releasing lithium. In this case, the negative electrode active material included together has high-capacity characteristics with respect to storing and releasing lithium, and serves to store and release all lithium ions transferred from the positive electrode.

The negative electrode binder included in the negative electrode active material layer according to an exemplary embodiment of the present specification may include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, polyacrylamide, ethylene-propylene-diene monomer (EPDM), sulfonated EPDM, styrene butadiene rubber (SBR), fluoro rubber, poly acrylic acid, and a material in which hydrogen of thereof is substituted with Li, Na, Ca, or the like, and also may include various copolymers thereof.

The negative electrode binder according to an exemplary embodiment of the present specification serves to support the negative electrode active material and the negative electrode conductive material in order to prevent distortion and structural deformation of the negative electrode structure during the volume expansion and relaxation of the silicon-based negative electrode active material. All general binders satisfying the above-described role can be applied, specifically, an aqueous binder can be used, and more specifically, a polyacrylamide (PAM)-based binder can be used.

As the negative electrode active material, the silicon-based active material undergoes more severe volume expansion compared to the carbon-based active materials (especially graphite), which may deteriorate the conductive network of the negative electrode during charging and discharging, and the existing SBR/CMC binder has low mechanical rigidity, which may exacerbate problems such as swelling during charging and discharging and deterioration in cell performance.

However, when a polyacrylamide-based binder is applied to a silicon-based negative electrode active material as in the present invention, the mechanical strength is superior to that of the existing binder, ensuring excellent conductive connectivity and suppressing swelling during charging and discharging.

In an exemplary embodiment of the present specification, the polyacrylamide-based binder refers to a binder whose main component is composed of a poly(meth)acrylamide-based monomer, and may additionally include other components such as poly(meth)acrylic acid (PAA), polyvinyl alcohol (PVA), and poly(meth)acrylonitrile (PAN).

In the present specification, the inclusion of a plurality of compounds in the negative electrode binder at specific ratios (expressed in parts by weight or weight ratios) may indicate that each compound (for example, acrylamide, acrylic acid, acrylonitrile) is included as a monomer in the binder polymer.

In the present specification, the negative electrode binder may include a plurality of compounds as monomers, and the monomer with the highest content can be considered representative, allowing the binder to be named after the corresponding 'monomer'-based compound.

In the present specification, "(meth)acrylic..." may mean methacrylic and/or acrylic.

In an exemplary embodiment of the present specification, when the polyacrylamide-based binder forms a copolymer by including a subcomponent as an additional monomer, the ratio of each monomer is not particularly limited as long as it belongs to the intended aqueous binder.

In an exemplary embodiment of the present specification, the negative electrode binder may be included in an amount of 30 parts by weight or less, preferably 25 parts by weight or less, and more preferably 20 parts by weight or less, and 1 part by weight or more or 3 parts by weight or more, based on 100 parts by weight of the negative electrode active material layer.

A negative electrode for a lithium secondary battery according to an exemplary embodiment of the present specification may include the negative electrode active material layer described above.

Specifically, the negative electrode may include a negative electrode current collector layer and a negative electrode active material layer arranged on at least one surface of the negative electrode current collector layer.

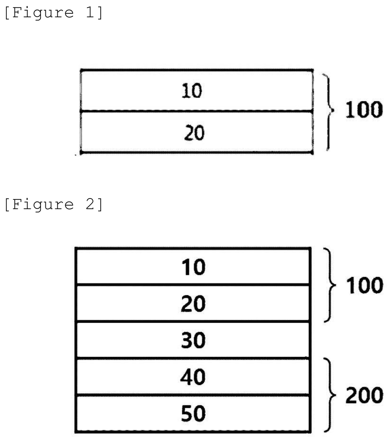

FIG. 1 is a view showing a laminated structure of a negative electrode for a lithium secondary battery according to an exemplary embodiment of the present specification. Specifically, a negative electrode 100 for a lithium secondary battery can be seen which includes a negative electrode active material layer 20 on one surface of a negative electrode current collector layer 10. FIG. 1 shows that the negative electrode active material layer is formed on one surface of the negative electrode current collector layer, but the negative electrode active material layer may be formed on both surfaces of the negative electrode current collector layer.

In an exemplary embodiment of the present specification, the negative electrode current collector layer may generally have a thickness of 1 µm to 100 µm. The negative electrode current collector layer is not particularly limited as long as it has high conductivity without causing a chemical change in the battery, and for example, copper, stainless steel, aluminum, nickel, titanium, fired carbon, copper or stainless steel surface-treated with carbon, nickel, titanium, silver, or the like, an aluminum-cadmium alloy, and the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present specification, a thickness of the negative electrode current collector layer may be 1 µm or greater and 100 µm or less, and a thickness of the negative electrode active material layer may be 20 µm or greater and 500 µm or less. However, the thickness may be variously modified depending on a type and a use of negative electrode used, and is not limited thereto.

The negative electrode active material layer may be formed by applying a negative electrode slurry, which includes the negative electrode active material described above, a negative electrode binder, a thickener, and/or a conductive material, to at least one surface of the current collector, followed by drying and rolling.

In an exemplary embodiment of the present specification, the negative electrode slurry may include a negative electrode active material layer composition and a slurry solvent.

In an exemplary embodiment of the present specification, a solid content of the negative electrode slurry may fall within a range of 5% or more and 40% or less.

In another exemplary embodiment, the solid content of the negative electrode slurry may fall within a range of 5% or more and 40% or less, preferably 7% or more and 35% or less, and more preferably 10% or more and 30% or less.

The solid content of the negative electrode slurry may mean a content of the negative electrode active material layer composition included in the negative electrode slurry, and may mean a content of the negative electrode active material layer composition based on 100 parts by weight of the negative electrode slurry.

When the solid content of the negative electrode slurry satisfies the above range, the viscosity is appropriate during formation of the negative electrode active material layer, so that particle agglomeration of the negative electrode active material layer composition is minimized to efficiently form the negative electrode active material layer.

In an exemplary embodiment of the present specification, the slurry solvent is not limited as long as it can dissolve the negative electrode active material layer composition. Specifically, distilled water may be used.

A negative electrode according to an exemplary embodiment of the present specification may be formed by coating and drying the negative electrode slurry on the negative electrode current collector layer.

Through the drying step, the slurry solvent in the negative electrode slurry can be dried.

The method for manufacturing a negative electrode for a lithium secondary battery according to an exemplary embodiment of the present specification below may apply the aforementioned description of the negative electrode active material layer and negative electrode.

A method for manufacturing a negative electrode for a lithium secondary battery according to an exemplary embodiment of the present specification includes the steps of preparing a negative electrode active material layer; and pre-lithiating at least one surface of the negative electrode active material layer, wherein the negative electrode active material layer includes a silicon-based negative electrode active material including SiOₓ (0 ≤ x < 2) and Si nanoparticles; a negative electrode conductive material; and a negative electrode binder, the silicon-based negative electrode active material is in a carbon-uncoated state, and an average particle diameter (D50) of the Si nanoparticles is 1 nm or less.

In an exemplary embodiment of the present specification, the step of preparing the negative electrode active material layer may include steps of preparing a negative electrode slurry including a silicon-based negative electrode active material including SiOₓ (0 ≤ x < 2) and Si nanoparticles, a negative electrode conductive material, and a negative electrode binder; coating the prepared negative electrode slurry on at least one surface of a negative electrode current collector; rolling the negative electrode current collector coated with the negative electrode slurry; and performing drying.

In this case, the step of preparing the negative electrode active material layer includes only a heat treatment step in the final drying step, and does not include a step of applying carbon to the silicon-based negative electrode active material. As a result, no additional heat treatment process is required, which can inhibit growth promotion of Si nanoparticles according to the present invention and, as mentioned above, solve the problems caused by the growth of Si nanoparticles.

In the method for manufacturing a negative electrode for a lithium secondary battery according to an exemplary embodiment of the present specification, the silicon-based negative electrode active material may apply the aforementioned description of the silicon-based negative electrode active material.

In the method for manufacturing a negative electrode for a lithium secondary battery according to an exemplary embodiment of the present specification, the SiOₓ (0 ≤ x < 2) may be in an amorphous phase, with Si nanoparticles dispersed therein.

The method for manufacturing a negative electrode for a lithium secondary battery according to an exemplary embodiment of the present specification includes a step of pre-lithiating at least one surface of the negative electrode active material layer.

In the method for manufacturing a negative electrode for a lithium secondary battery according to an exemplary embodiment of the present specification, the pre-lithiation step may be performed by any one of a lithium electrolytic plating process, a lithium metal transfer process, a lithium metal deposition process, and a stabilized lithium metal powder (SLMP) coating process, and preferably may be performed by a lithium metal transfer process which offers a low degree of cell degradation during battery operation and a fast reaction speed.

In the method for manufacturing a negative electrode for a lithium secondary battery according to an exemplary embodiment of the present specification, the pre-lithiation step may include a step of transferring a lithium metal layer to at least one surface of the negative electrode active material layer. In this case, the lithium metal layer is a layer including lithium metal for pre-lithiating at least one surface of the negative electrode active material layer, and a commonly used Li metal foil may be used, but is not limited thereto.

In the method for manufacturing a negative electrode for a lithium secondary battery according to an exemplary embodiment of the present specification, the pre-lithiation step may include a step of transferring a transfer laminate including a lithium metal layer and a base material layer to at least one surface of the negative electrode active material layer, and specifically may include steps of preparing a transfer laminate including a lithium metal layer and a base material layer; bringing the transfer laminate into contact such that the lithium metal layer faces at least one surface of the negative electrode active material layer; and separating the base material layer from the lithium metal layer.

In the method for manufacturing a negative electrode for a lithium secondary battery according to an exemplary embodiment of the present specification, a thickness of the transfer laminate may be 65 µm or less, specifically 35 µm or less, and 10 µm or greater, specifically 11 µm or greater.

When the thickness of the transfer laminate according to an exemplary embodiment of the present specification falls within the above range, the amount of heat generated during pre-lithiation is small and the heat is dissipated well, so lithium loss and safety problems may not occur.

In the method for manufacturing a negative electrode for a lithium secondary battery according to an exemplary embodiment of the present specification, a thickness of the lithium metal layer may be 1 µm or greater and 10 µm or less, specifically 1 µm or greater and 9 µm or less, and more specifically 3 µm or greater and 6.5 µm or less.

When the thickness of the lithium metal layer according to an exemplary embodiment of the present specification is equal to or greater than the lower limit of the range, pre-lithiation can proceed to an extent that solves the irreversible problem of the electrode, thereby improving the coulombic efficiency. Additionally, when the thickness is equal to or less than the upper limit of the range, the amount of heat generated during pre-lithiation is small, and the heat is dissipated well, so lithium loss and safety problems due to the generation of lithium byproducts may not occur.

In the method for manufacturing a negative electrode for a lithium secondary battery according to an exemplary embodiment of the present specification, the base material layer can be used without limitation as long as it has the characteristics of being able to withstand process conditions such as high temperatures during the step of depositing the lithium metal layer and preventing the problem of reverse peeling, where the lithium metal layer is transferred onto the base material layer during a winding process for transferring the deposited lithium metal layer.

Specifically, in the method for manufacturing a negative electrode for a lithium secondary battery according to an exemplary embodiment of the present specification, the base material layer may be one or more selected from the group consisting of polyethylene terephthalate (PET), polyimide (PI), poly(methylmethacrylate) (PMMA), polypropylene, polyethylene, and polycarbonate.

A thickness of the base material layer according to an exemplary embodiment of the present specification may be 1 µm or greater and 300 µm or less, specifically 5 µm or greater and 200 µm or less, and more specifically 10 µm or greater and 100 µm or less.

When the thicknesses of the base material layer and the lithium metal layer fall within the above ranges, the transfer of the lithium metal to the negative electrode active material layer can occur efficiently and the reverse transfer can be prevented.

In the method for manufacturing a negative electrode for a lithium secondary battery according to an exemplary embodiment of the present specification, a deposition method for depositing the lithium metal layer on the base material layer may be selected from a physical vapor deposition (PVD) method and a chemical vapor deposition (CVD) method, and among the physical vapor deposition methods, a thermal evaporation method may be mainly used. However, no such limitation is intended, and various deposition methods used in the art may be used.

In addition, a structure may be possible, which further includes a separate layer for reducing heat generated by pre-lithiation between the lithium metal layer and the base material layer, and a structure may be possible where the base material layer cover part or all of the lithium metal layer or the separate layer positioned on the lithium metal layer; however, there is no limitation on the structure.

In the method for manufacturing a negative electrode for a lithium secondary battery according to an exemplary embodiment of the present specification, the transfer laminate in the step of preparing the transfer laminate may further include a release layer. Specifically, the release layer may be included between the lithium metal layer and the base material layer. By coating the release layer between the lithium metal layer and the base material layer, the transfer may be facilitated.

In the step of preparing the transfer laminate according to an exemplary embodiment of the present specification, the transfer laminate may further include a release layer, and the step of separating the base material layer from the lithium metal layer may include a step of separating the release layer.

In the method for manufacturing a negative electrode for a lithium secondary battery according to an exemplary embodiment of the present specification, the release layer may be one or more selected from the group consisting of polycarbonate (PC), polydimethylsiloxane (PDMS), polymethylhydrosiloxane (PMHS), polyimide (PI), and polymethylmethacrylate (PMMA), but is not limited thereto, and a silicon-based or fluorine-based material may also be used.

A thickness of the release layer according to an exemplary embodiment of the present specification may be 0.2 µm or greater and 3 µm or less, specifically, 0.5 µm or greater and 1 µm or less.

In the method for manufacturing a negative electrode for a lithium secondary battery according to an exemplary embodiment of the present specification, when the release layer falls within the thickness range, sufficient release force can be secured, and the release layer positioned on a surface after transfer of the lithium metal layer can prevent heat dissipation and accelerated formation of byproducts.

The release layer according to an exemplary embodiment of the present specification may be formed by a coating method. For example, the coating method may be a method selected from the group consisting of dip coating, spray coating, spin coating, die coating, gravure coating, micro-gravure coating, comma coating, and roll coating, but is not limited thereto, and various coating methods that can be used in the art to form a coating layer can be used.

In the method for manufacturing a negative electrode for a lithium secondary battery according to an exemplary embodiment of the present specification, the step of bringing the transfer laminate into contact may further include a pressurizing step, which may be a step of pressurizing the transfer laminate while bringing the transfer laminate into contact.

The pressurizing step is a step for transferring the lithium metal layer to at least one surface of the electrode active material layer. The pressurizing step can promote contact between lithium and the electrode active material, enabling the pre-lithiation to proceed more smoothly.

In the method for manufacturing a negative electrode for a lithium secondary battery according to an exemplary embodiment of the present specification, the pressurizing step may involve applying a load of higher than 200 kgf and 600 kgf or less, 250 kgf or higher and 500 kgf or less, 300 kgf or higher and 500 kgf or less, 350 kgf or higher and 450 kgf or less, or 400 kgf or higher and 450 kgf or less.

In an exemplary embodiment of the present specification, when a load satisfying the above range is applied, pre-lithiation by transfer can proceed more actively, and at the same time, pre-lithiation progresses within an appropriate range, thereby making it possible to minimize residual lithium on the electrode surface and loss of lithium added. In addition, the electrode thickness can be formed thin despite the high energy density.

That is, the transferring step according to an exemplary embodiment of the present specification may be to position the transfer laminate such that the lithium metal layer becomes in contact with one surface or both surfaces of the electrode active material layer, and then perform transfer through a roll pressing process while applying a load within the above range.

The method for manufacturing an electrode for a lithium secondary battery according to an exemplary embodiment of the present specification may include a step of separating the base material layer from the lithium metal layer.

In an exemplary embodiment of the present specification, the pre-lithiation may be a process where a pre-lithiation reaction begins between the electrode active material layer and the lithium metal layer from a time point at which the lithium metal layer comes into contact with at least one surface of the electrode active material layer, within several seconds to several minutes after the contact of the lithium metal layer, or from a time point at which a carrier film is removed.

In an exemplary embodiment of the present specification, the pre-lithiation reaction may be completed within several days, within 24 hours, or within several seconds to several minutes from the time point at which the lithium metal layer comes into contact with at least one surface of the electrode active material layer.

The lithium introduced into the negative electrode during the pre-lithiation of the negative electrode active material layer according to an exemplary embodiment of the present specification reduces the initial irreversible capacity of the negative electrode while lowering the initial charge capacity of the negative electrode. As a result, the energy density or service life performance of the battery is improved depending on the degree of pre-lithiation. This means that the performance of the battery is improved compared to a battery using a negative electrode that has not undergone pre-lithiation.

In addition, the pre-lithiation step according to an exemplary embodiment of the present specification may involve charging lithium ions in an amount equivalent to 30% to 40% of a loading amount of the negative electrode. This is to balance the efficiency with the positive electrode.

The pre-lithiation step according to an exemplary embodiment of the present specification may be expressed as a step of charging lithium ions such that the charge/discharge efficiency of the lithium secondary battery finally manufactured according to an exemplary embodiment of the present specification becomes 90% or higher.

A lithium secondary battery according to an exemplary embodiment of the present specification may include a positive electrode for a lithium secondary battery; the negative electrode for a lithium secondary battery described above; a separator provided between the positive electrode for a lithium secondary battery and the negative electrode for a lithium secondary battery; and an electrolyte.

FIG. 2 is a view showing a stack structure of a lithium secondary battery according to an exemplary embodiment of the present specification. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a stack structure with a separator 30 interposed therebetween.

Since the negative electrode for the above lithium secondary battery is the same as the negative electrode described above, the detailed description will be omitted.

The positive electrode for a lithium secondary battery may include a positive electrode current collector layer and a positive electrode active material layer formed on at least one surface of the positive electrode current collector layer and including the positive electrode active material.

In the positive electrode, the positive electrode current collector layer is not particularly limited as long as it has conductivity without causing a chemical change in the battery, and for example, stainless steel, aluminum, nickel, titanium, fired carbon, or aluminum or stainless steel surface-treated with carbon, nickel, titanium, silver, or the like may be used. In addition, the positive electrode current collector layer may typically have a thickness of 3 µm to 500 µm, and a surface of the positive electrode current collector layer may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li_{1+c1}Mn_{2-c1}O₄ (0≤c1≤0.33), LiMnO₃, LiMn₂O₃ and LiMnO₂; a lithium copper oxide (Li₂CuO₂); a vanadium oxide such as LiV₃O₈, V₂O₅ and Cu₂V₂O₇; a Ni-site type lithium nickel oxide represented by chemical formula LiNi_{1-c2}M_{c2}O₂ (where M is at least one selected from the group consisting of Co, Mn, Al, Cu, Fe, Mg, B, and Ga, and satisfies 0.01≤c2≤0.5); a lithium manganese composite oxide represented by chemical formula LiMn_{2-c3}M_{c3}O₂ (where M is at least one selected from the group consisting of Co, Ni, Fe, Cr, Zn and Ta, and satisfies 0.01≤c3≤0.1) or Li₂Mn₃MO₈ (where M is at least one selected from the group consisting of Fe, Co, Ni, Cu and Zn); LiMn₂O₄ in which a part of Li of the chemical formula is substituted with an alkaline earth metal ion, or the like, but is not limited thereto.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof may be used alone or a mixture of two or more thereof may be used.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte solution as well as a low resistance to the migration of electrolyte solution ions is preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, ethyl methyl carbonate, gamma-butyrolactone, 1,2-dimethoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolytic solution with high electric conductivity may be prepared, and therefore, such a combined use may be more preferable.

A lithium salt may be used as the metal salt, and the lithium salt is a material that is readily soluble in the non-aqueous electrolytic solution, in which, for example, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving service life characteristics of the battery, suppressing a decrease in battery capacity, improving discharge capacity of the battery, and the like, in addition to the above-described electrolyte components.

A battery module according to an exemplary embodiment of the present specification may include the lithium secondary battery described above.

A battery pack according to another exemplary embodiment of the present specification may include the aforementioned lithium secondary battery, or a battery module including the aforementioned lithium secondary battery.

Since the lithium secondary battery according to the exemplary embodiments of the present specification stably exhibits excellent discharge capacity, output characteristics and cycle performance, it can be used as a power source for a portable device such as a mobile phone, a laptop computer, and a digital camera, as well as a medium to large sized device selected from the group consisting of an electric vehicle, a hybrid electric vehicle, a plug-in hybrid electric vehicle, and a power storage system. For example, the battery module or battery pack may be used as a power source for one or more medium to large sized devices, such as a power tool; an electric car such as an electric vehicle (EV), a hybrid electric vehicle, and a plug-in hybrid electric vehicle (PHEV); or a power storage system.

### [Mode for Invention]

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

### <Preparation Example>

### <Preparation of Negative Electrode>

### Example 1

94g of a powder in which Si and SiO₂ were mixed in a molar ratio of 1:1 was mixed and heated under vacuum to a sublimation temperature of 1,400°C in a reactor. Then, a mixed gas of vaporized Si and SiO₂ was reacted in a cooling zone in a vacuum state having a cooling temperature of 800°C and condensed to a solid phase. The resultant preliminary silicon-based negative electrode active material was pulverized using a ball mill for 3 hours to prepare silicon-based particles having a size of 6.1 µm, which were used as the negative electrode active material of Example 1.

A negative electrode active material layer composition was prepared using a silicon-based negative electrode active material (average particle diameter (D50): 6.1 µm), a plate-like graphite-based conductive material, SWCNTs, and polyacrylamide binder at a weight ratio of 80:9.6:0.4:10. A negative electrode slurry (solid concentration: 25 wt%) was prepared by adding the composition to distilled water as a solvent for formation of a negative electrode slurry.

The plate-like graphite-based conductive material has a BET specific surface area of 17 m²/g, a D10 of 1.7 µm, a D50 of 3.5 µm, and a D90 of 6.8 µm, and the SWCNTs have a BET specific surface area of 1,000 m²/g to 1,500 m²/g and an aspect ratio of 10,000 or greater.

As a mixing method, the conductive material, the binder, and water were dispersed at 2500 rpm for 30 minutes using a homo mixer, the active material was added to the dispersion, and the resulting mixture was dispersed at 2500 rpm for 30 minutes to prepare a negative electrode slurry.

The negative electrode slurry was coated on both surfaces of a copper current collector (thickness: 8 µm) serving as a negative electrode current collector with a capacity of 3.675 mAh/cm², which was then roll-pressed and dried in a vacuum oven at 130°C for 10 hours to form a negative electrode active material layer (thickness: 25 µm).

The pre-lithiation was performed by transferring a lithium metal (thickness: 6.2 µm) onto the negative electrode active material layer.

### Comparative Example 1

A negative electrode was prepared in the same preparation method as in Example 1, except that the negative electrode active material layer was not pre-lithiated in Example 1.

### Comparative Example 2

A negative electrode to which pre-lithiation was applied was prepared in the same preparation method as in Example 1, except that the negative electrode active material of Example 1 was changed to a silicon-based negative electrode active material coated with carbon.

Specifically, 94g of a powder in which Si and SiO₂ were mixed in a molar ratio of 1:1 was mixed and heated under vacuum to a sublimation temperature of 1,400°C in a reactor. Then, a mixed gas of vaporized Si and SiO₂ was reacted in a cooling zone in a vacuum state having a cooling temperature of 800°C and condensed to a solid phase. The resultant preliminary silicon-based negative electrode active material was pulverized using a ball mill for 3 hours to prepare silicon-based particles with a size of 6 µm. Thereafter, the silicon-based negative electrode active material was positioned in a hot zone of a CVD apparatus while maintaining an inert atmosphere by flowing Ar gas, and methane was blown into the hot zone at 900°C using Ar as a carrier gas and reacted at 10⁻¹ torr for 5 hours to form a carbon layer on the surface of the silicon-based negative electrode active material, resulting in a carbon-coated (carbon-applied) silicon-based negative electrode active material of Comparative Example 2.

### Comparative Example 3

A negative electrode was prepared in the same manner as in Comparative Example 2, except that the negative electrode active material layer in which the carbon-coated silicon-based negative electrode active material of Comparative Example 2 was used was not subjected to pre-lithiation.

### Comparative Example 4

A negative electrode was prepared in the same manufacturing method as in Example 1, except that additional heat treatment was performed to control the average particle diameter (D50) of the Si nanoparticles in Example 1.

Specifically, 94g of a powder in which Si and SiO₂ were mixed in a molar ratio of 1:1 was mixed and heated under vacuum to a sublimation temperature of 1,400°C in a reactor. Then, a mixed gas of vaporized Si and SiO₂ was reacted in a cooling zone in a vacuum state having a cooling temperature of 800°C and condensed to a solid phase. The resultant preliminary silicon-based negative electrode active material was pulverized using a ball mill for 3 hours to prepare silicon-based particles with a size of 6 µm. Thereafter, the silicon-based negative electrode active material was positioned in the hot zone at 900°C while maintaining an inert atmosphere by flowing Ar gas, and heat-treatment was performed for 5 hours to grow the average particle diameter (D50) of Si nanoparticles in the silicon-based negative electrode active material to a level of 3 nm.

### <Preparation of Secondary Battery>

A positive electrode slurry (solid concentration: 78 wt%) was prepared by adding LiNi_{0.6}Co_{0.2}Mn_{0.2}O₂ (average particle diameter (D50): 4.6 µm) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry at a weight ratio of 97:1.2:1.8.

The positive electrode slurry was coated on both surfaces of an aluminum current collector (thickness: 12 µm) serving as a positive electrode current collector with a capacity of 3.5 mAh/cm², which was then roll-pressed and dried in a vacuum oven at 130°C for 10 hours to form a positive electrode active material layer, resulting in a positive electrode (thickness of the positive electrode: 162 µm).

A secondary battery of Example 1 was prepared by interposing a polyethylene separator between the positive electrode and the negative electrode of Example 1 and injecting an electrolyte.

The electrolyte was obtained by adding LiPF₆ as a lithium salt at a concentration of 1M to an organic solvent, in which fluoroethylene carbonate (FEC) and diethyl carbonate (DEC) were mixed at a volume ratio of 30:70.

Secondary batteries were each prepared in the same manner as above, except that the negative electrodes of the Examples and Comparative Examples were used.

### Experimental Example 1: Evaluation of Service Life Characteristics

It was confirmed through TEM whether the surface of the silicon-based negative electrode active material used in the negative electrodes prepared in Example 1 and Comparative Examples 1 to 4 was coated with carbon. If carbon was coated, it was marked as O, and if not, it was marked as X, as shown in Table 1 below.

In addition, the average particle diameter (D50) of Si nanoparticles in the silicon-based negative electrode active material was calculated by fitting the XRD results using the Scherrer equation and listed in Table 1 below, and in this case, the size of nanoparticles was measured based on Si (220) (2θ = 47.4° to 48.5°).

In addition, the service life of the secondary batteries including the negative electrodes prepared in Example 1 and Comparative Examples 1 to 4 was evaluated using an electrochemical charge/discharge tester, and the capacity retention rate was assessed at 500th cycles. When measuring the initial charge/discharge capacity, the C-rate was set to 1.0 C, charging was performed under the upper limit voltage of 4.2 V, CCCV condition, and the cut-off current of 0.05 C, and discharging was performed under the lower limit voltage of 2.5 V at 0.5C and CC condition. The results are shown in Table 1 below. Capacity retention rate (%) = {(discharge capacity at Nth cycle)/(discharge capacity at first cycle)} × 100%

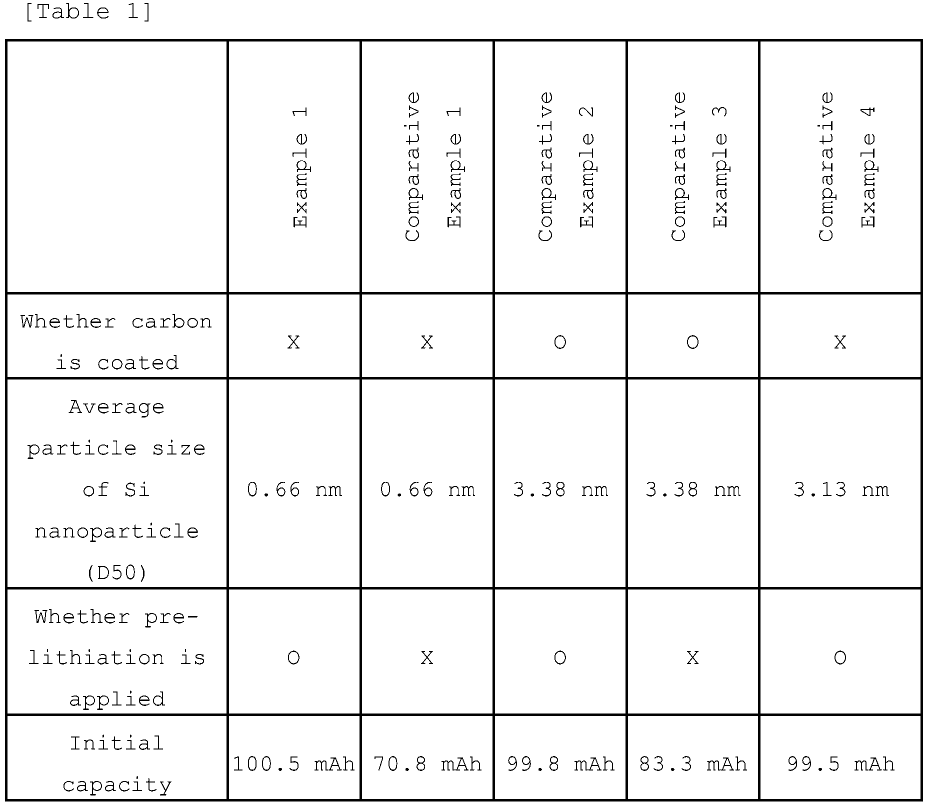

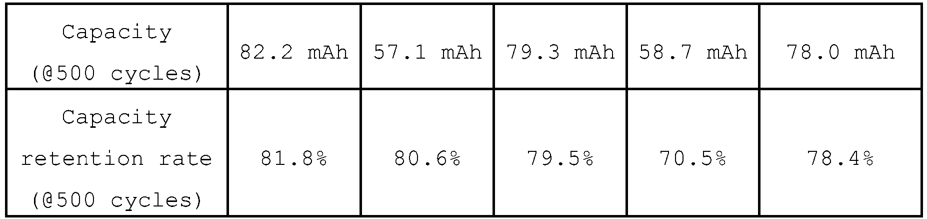

As can be seen in Table 1 above, it was confirmed that the secondary battery of Example 1, in which the silicon-based negative electrode active material not coated with carbon was used and the pre-lithiation was performed, had excellent initial capacity and service life characteristics.

Specifically, it was confirmed that Comparative Example 1, in which the silicon-based negative electrode active material not coated with carbon was used, showed the capacity retention rate similar to that of Example 1 but had the significantly lower initial capacity and discharge capacity than those of Example 1 because the pre-lithiation was not performed.

It was confirmed that Comparative Example 2 had the initial capacity and discharge capacity, which were similarly high to those of Example 1 as a result of the pre-lithiation but showed the significantly lower capacity retention rate than that of Example 1 because the growth of Si nanoparticles occurred during the process of coating the silicon-based negative electrode active material with carbon. It is known in the related art that coating carbon on the surface of a silicon-based negative electrode active material improves the cycle performance of the battery by acting as a buffer during the volume expansion of silicon. However, it was confirmed through the present invention that omitting the carbon coating or application process on the surface of the silicon-based active material keeps the Si nanoparticles in the silicon-based active material small, thereby suppressing stress on the surrounding material inside the negative electrode during charging and discharging, resulting in reduced manufacturing cost and time while exhibiting superior battery service life characteristics.

It was confirmed that Comparative Example 3, showed the low initial capacity and discharge capacity because pre-lithiation was not performed, and also showed the relatively poor service life characteristics due to the use of carbon-coated silicon-based negative electrode active material.

It was confirmed that in Comparative Example 4, the growth of Si nanoparticles in the carbon-uncoated silicon-based negative electrode active material was caused by the additional heat treatment, and in this case, the capacity retention rate decreased compared to Example 1. With the above results, it was confirmed that the main cause of the relatively low capacity retention rate in Comparative Examples 2 and 3 was the size of Si nanoparticles in the silicon-based negative electrode active material.

Therefore, the negative electrode for a lithium secondary battery according to an exemplary embodiment of the present specification can contribute to the expression of the initial capacity of the cell by improving low conductivity and initial efficiency through the pre-lithiation process. In particular, by omitting an additional carbon coating process, the size of Si nanoparticles in the silicon-based negative electrode active material can be kept small, thereby maintaining the initial capacity and efficiency of the cell while offering an advantage in the life performance of the cell, as well as reducing the manufacturing cost and time of the negative electrode.

### <Explanation of Reference Numerals and Symbols>

10: negative electrode current collector layer
20: negative electrode active material layer
30: separator
40: positive electrode active material layer
50: positive electrode current collector layer
100: negative electrode for lithium secondary battery
200: positive electrode for lithium secondary battery

## Claims

1. A negative electrode for a lithium secondary battery, comprising:
a negative electrode active material layer comprising:
a silicon-based negative electrode active material comprising SiOₓ (0 ≤ x < 2) and Si nanoparticles;
a negative electrode conductive material; and
a negative electrode binder,
wherein the silicon-based negative electrode active material is in a carbon-uncoated state,
wherein an average particle diameter (D50) of the Si nanoparticles is 1 nm or less, and
wherein the negative electrode active material layer is pre-lithiated on at least one surface.

2. The negative electrode for a lithium secondary battery of claim 1, wherein the SiOₓ (0 ≤ x < 2) is in an amorphous phase and the Si nanoparticles are dispersed therein.

3. The negative electrode for a lithium secondary battery of claim 1, wherein an average particle diameter (D50) of the silicon-based negative electrode active material is 1 µm or greater and 10 µm or less.

4. The negative electrode for a lithium secondary battery of claim 1, wherein an average particle diameter (D50) of the silicon-based negative electrode active material is 3 µm or greater and 8 µm or less.

5. The negative electrode for a lithium secondary battery of claim 1, wherein the silicon-based negative electrode active material is included in an amount of 60 parts by weight or more based on 100 parts by weight of the negative electrode active material layer.

6. A lithium secondary battery comprising:
a positive electrode for the lithium secondary battery;
the negative electrode for a lithium secondary battery of any one of claims 1 to 5;
a separator provided between the positive electrode for the lithium secondary battery and the negative electrode for the lithium secondary battery; and
an electrolyte.

7. A battery module comprising the lithium secondary battery of claim 6.

8. A battery pack comprising the lithium secondary battery of claim 6.

9. A battery pack comprising the battery module of claim 7.

10. A method for manufacturing a negative electrode for a lithium secondary battery, the method comprising:
preparing a negative electrode active material layer; and
pre-lithiating at least one surface of the negative electrode active material layer,
wherein the negative electrode active material layer comprises a silicon-based negative electrode active material comprising SiOₓ (0 ≤ x < 2) and Si nanoparticles; a negative electrode conductive material; and a negative electrode binder,
wherein the silicon-based negative electrode active material is in a carbon-uncoated state, and
wherein an average particle diameter (D50) of the Si nanoparticles is 1 nm or less.

11. The method of claim 10, wherein the SiOₓ (0 ≤ x < 2) is in an amorphous phase and the Si nanoparticles are dispersed therein.

12. The method of claim 10, wherein the pre-lithiating at least one surface of the negative electrode active material layer comprises charging lithium ions in an amount equivalent to 30% to 40% of a loading amount of the negative electrode.
